(19) Europäisches Patentamt
European Patent Office
Office européen des brevets

(11) **EP 2 706 598 A1**

(12) **EUROPEAN PATENT APPLICATION**

(43) Date of publication:
**12.03.2014 Bulletin 2014/11**

(21) Application number: **13182972.3**

(22) Date of filing: **04.09.2013**

(51) Int Cl.:
*H01M 4/485* (2010.01)      *H01M 4/525* (2010.01)
*H01M 4/587* (2010.01)      *H01M 10/0525* (2010.01)
*H01M 10/0562* (2010.01)      *H01M 4/62* (2006.01)
*H01M 4/02* (2006.01)

| | |
|---|---|
| (84) Designated Contracting States:<br>**AL AT BE BG CH CY CZ DE DK EE ES FI FR GB<br>GR HR HU IE IS IT LI LT LU LV MC MK MT NL NO<br>PL PT RO RS SE SI SK SM TR**<br>Designated Extension States:<br>**BA ME**<br><br>(30) Priority: **07.09.2012 JP 2012197146**<br><br>(71) Applicant: **NGK Insulators, Ltd.**<br>**Nagoya-city, Aichi 467-8530 (JP)** | (72) Inventors:<br> • **Otsuka, Haruo**<br>  **Nagoya-city, Aichi 467-8530 (JP)**<br> • **Kitoh, Kenshin**<br>  **Nagoya-city, Aichi 467-8530 (JP)**<br><br>(74) Representative: **Naylor, Matthew John et al**<br>**Mewburn Ellis LLP**<br>**33 Gutter Lane**<br>**London**<br>**EC2V 8AS (GB)** |

(54) **All-solid-state cell**

(57)      An all-solid-state cell (10) has a positive electrode layer (14) containing a positive electrode active material (12), a solid electrolyte layer (16) containing a lithium ion conducting material, and a negative electrode layer (20) containing a negative electrode active material (18). The negative electrode active material (18) in the negative electrode layer (20) contains a plurality of cylindrical carbon nanotube molecules (28), and the axes of the carbon nanotube molecules (28) are oriented in a predetermined direction.

FIG. 1B

**Description**

CROSS-REFERENCE TO RELATED APPLICATION

This application is based upon and claims the benefit of priority from Japanese Patent Application No. 2012-197146 filed on September 7, 2012, the contents of which are incorporated herein by reference.

BACKGROUND OF THE INVENTION

Field of the Invention:

The present invention relates to an all-solid-state cell using a carbon nanotube in an electrode active material.

Description of the Related Art:

In recent years, with the advancement of portable devices such as personal computers and mobile phones, there has been rapidly increasing demand for batteries usable as a power source thereof. In cells of the batteries for such purposes, a liquid electrolyte (an electrolytic solution) containing a combustible organic diluent solvent has been used as an ion transfer medium. The cell using such an electrolytic solution can cause problems of solution leakage, ignition, explosion, etc.

In view of solving the problems, all-solid-state cells, which use a solid electrolyte instead of the liquid electrolyte and contain only solid components to ensure intrinsic safety, have been developing. The all-solid-state cell contains the solid electrolyte, and therefore hardly causes ignition, does not cause the liquid leakage, and is hardly deteriorated in battery performance by corrosion.

Nowadays, the all-solid-state cells have been used for various purposes, and thus have been required to have a higher capacity and a smaller size. Under such circumstances, an all-solid-state cell using a carbon nanotube in an electrode active material has been proposed (see International Publication No. WO 2011/105021 and Japanese Laid-Open Patent Publication Nos. 2008-181751 and 2007-141520).

SUMMARY OF THE INVENTION

In International Publication No. WO 2011/105021, a carbon nanotube layer is formed by thermally decomposing a silicon carbide surface, and is used, without modifications, as a negative electrode active material in a solid electrolyte secondary battery. Therefore, the (solid electrolyte-side) ends of the carbon nanotube molecules are closed, and the internal spaces of the carbon nanotube molecules are separated from the outside. Thus, in the battery, lithium ions are located in spaces between (the outer walls of) the carbon nanotube molecules in a charged state, and the lithium ions are emitted from the spaces in a discharging process. Since the internal spaces of the carbon nanotube molecules are separated from the outside as described above, the negative electrode active material cannot store and emit a large amount of the charge carrier ions. Consequently, the capacity of the battery can be improved only to a limited extent.

Japanese Laid-Open Patent Publication No. 2008-181751 describes an improvement of the battery structure of International Publication No. WO 2011/105021. In this document, a sieve having an opening is formed at an end of each carbon nanotube molecule in the negative electrode active material. The size of the opening is smaller than the inner diameter of the carbon nanotube, but the charge carrier ions can pass through the opening. In another example, a porous film is disposed on the electrolyte-side surface of the active material layer. The average pore diameter of the porous film is smaller than the inner diameter of the carbon nanotube, but the charge carrier ions can pass through the porous film. In this other example, the diameter of the opening is equal to the inner diameter of the carbon nanotube, and the porous film acts as a sieve. Consequently, the negative electrode active material can store and emit a larger amount of the charge carrier ions as compared with the structure of International Publication No. WO 2011/105021.

Japanese Laid-Open Patent Publication No. 2007-141520 describes a liquid-type secondary battery using an electrolytic solution. This battery has an ion path at the end of each carbon nanotube molecule in the negative electrode active material in the same manner as Japanese Laid-Open Patent Publication No. 2008-181751.

As described in Japanese Laid-Open Patent Publication Nos. 2008-181751 and 2007-141520, though the charge carrier ions can be transferred through the opening of the sieve formed at the end of the carbon nanotube molecule or the porous film, the size of the opening and the average pore diameter of the porous film are smaller than the inner diameter of the carbon nanotube. Therefore, in certain cases, only one, two, or three lithium ions can be simultaneously transferred, and the sieve may disadvantageously act as a resistance against the lithium ion emission from the negative electrode active material and the lithium ion insertion into the negative electrode active material. Consequently, a large amount of the lithium ions cannot be emitted and inserted in a high input/output process, and the battery cannot have a high capacity.

In view of the above problems, an object of the present invention is to provide an all-solid-state cell, which does not have a high resistance against lithium ion emission from a negative electrode active material and lithium ion insertion into the material, and is capable of emitting and inserting a large amount of lithium ions in a high input/output process to achieve a high battery capacity.

[1] An all-solid-state cell according to the present invention comprises a positive electrode layer containing a positive electrode active material, a solid electrolyte layer containing a lithium ion conducting material, and a negative electrode layer containing a negative electrode active material. In the all-solid-state cell, the negative electrode active material in the negative electrode layer contains a plurality of cylindrical carbon nanotube molecules, and axes of the carbon nanotube molecules are oriented in a predetermined direction.

[2] In the invention, the positive electrode active material in the positive electrode layer may be a polycrystalline body containing a plurality of lithium transition metal oxide particles, and the particles may be oriented in the predetermined direction.

[3] In the invention, the predetermined direction may be a direction of lithium ion conduction.

[4] In the invention, the predetermined direction may be a direction from the positive electrode layer toward the negative electrode layer.

[5] In the invention, a diameter of an opening formed at one end of the carbon nanotube molecule may be approximately equal to a diameter of an opening formed at another end of the molecule.

[6] In the invention, a predetermined crystal plane of each of the particles in the positive electrode active material may be oriented in a direction from the positive electrode layer toward the negative electrode layer.

[7] In this case, the particles in the positive electrode active material may have a layered rock salt structure or a spinel structure.

[8] In the all-solid-state cell according to [7], the particles in the positive electrode active material may have a layered rock salt structure represented by the general formula of $Li_p(Ni_x,Co_y,Al_z)O_2$ ($0.9 \leq p \leq 1.3$, $0.6 < x < 0.9$, $0.1 < y \leq 0.3$, $0 \leq z \leq 0.2$, $x + y + z = 1$), and the predetermined crystal plane may be a (003) plane.

[9] In the invention, the lithium ion conducting material in the solid electrolyte layer may contain a garnet-, nitride-, perovskite-, phosphate-, sulfide-, or macromolecule-based material.

[10] In the invention, the positive electrode layer may contain the positive electrode active material and a positive electrode collector, the solid electrolyte layer may be located on one side of the positive electrode active material, and the positive electrode collector may be located on another side of the positive electrode active material. Furthermore, the negative electrode layer may contain the negative electrode active material and a negative electrode collector, the solid electrolyte layer may be located on one side of the negative electrode active material, and the negative electrode collector may be located on another side of the negative electrode active material.

The all-solid-state cell of the invention does not have a high resistance against the lithium ion emission from the negative electrode active material and the lithium ion insertion into the negative electrode active material. Therefore, the all-solid-state cell is capable of emitting and inserting a large amount of lithium ions in a high input/output process, and can achieve a high battery capacity.

The above and other objects, features, and advantages of the present invention will become more apparent from the following description when taken in conjunction with the accompanying drawings in which a preferred embodiment of the present invention is shown by way of illustrative example.

BRIEF DESCRIPTION OF THE DRAWINGS

FIG. 1A is a cross-sectional view of a structure of an all-solid-state cell according to an embodiment of the present invention;

FIG. 1B is an enlarged cross-sectional view of the structure;

FIG. 2A is an explanatory view of a central axis of a carbon nanotube molecule, which corresponds to a vertical axis extending from a positive electrode layer to a negative electrode layer;

FIGS. 2B and 2C are explanatory views of the central axis, each of which is tilted at an angle $\theta$ to the vertical axis;

FIG. 3A is a schematic view of a solid electrolyte layer and a negative electrode active material in a conventional all-solid-state cell;

FIG. 3B is a schematic view of a discharge rate characteristic of the conventional all-solid-state cell;

FIG. 4A is a schematic view of a solid electrolyte layer and a negative electrode active material in the all-solid-state cell of the embodiment;

FIG. 4B is a schematic view of a discharge rate characteristic of the all-solid-state cell of the embodiment;

FIG. 5A is a view showing a process of forming a catalyst metal layer on a base;

FIG. 5B is a view showing a process of forming a carbon nanotube molecule having a main portion and a cap on the base;

FIG. 5C is a view showing a process of removing the cap;

FIG. 6 is a cross-sectional view of a structure of an all-solid-state cell according to a modification example;

FIG. 7A is a cross-sectional view of a structure of an all-solid-state cell according to Example 1;

FIG. 7B is a cross-sectional view of a structure of an all-solid-state cell according to Example 2;

FIG. 8A is a cross-sectional view of a structure of an all-solid-state cell according to Reference Example 1;

FIG. 8B is a cross-sectional view of a structure of an all-solid-state cell according to Comparative Example 1;

FIG. 9 is a graph showing volumetric energy density changes with respect to solid electrolyte layer thicknesses in Example 1, Example 2, Reference Example 1, and Comparative Example 1;

FIG. 10 is a graph showing volumetric energy density changes with respect to solid electrolyte layer thicknesses in Example 3, Example 4, Reference Example 2, and Comparative Example 2; and

FIG. 11 is a graph showing volumetric energy density changes with respect to solid electrolyte layer thicknesses in Example 5, Example 6, Reference Example 3, and Comparative Example 3.

DESCRIPTION OF THE PREFERRED EMBODIMENTS

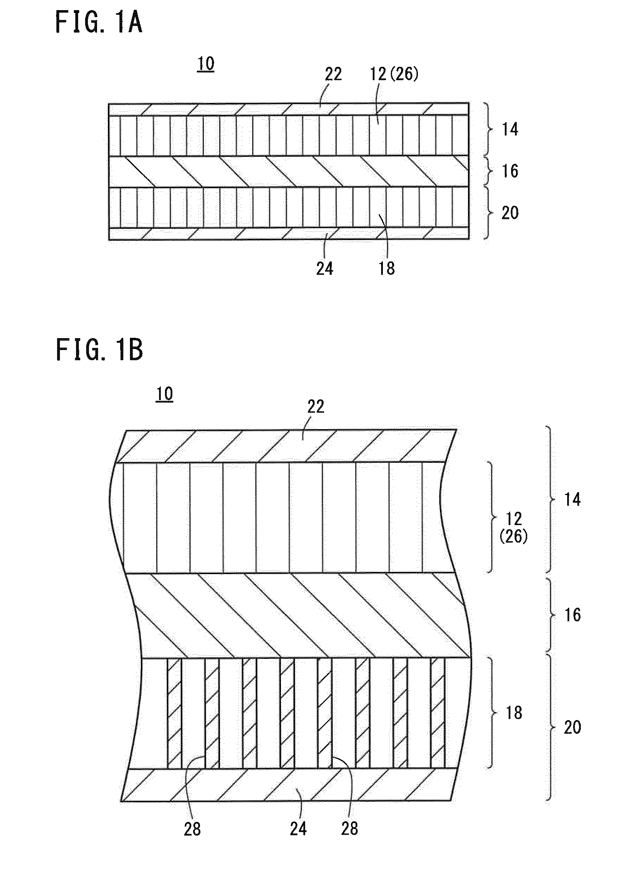

An embodiment of the all-solid-state cell of the present invention will be described below with reference to FIGS. 1A to 11.

As shown in FIG. 1A, an all-solid-state cell 10 according to this embodiment has a positive electrode layer 14 containing a positive electrode active material 12, a solid electrolyte layer 16 containing a lithium ion conducting material, and a negative electrode layer 20 containing a negative electrode active material 18. The solid electrolyte layer 16 is sandwiched between the positive electrode layer 14 and the negative electrode layer 20. The positive electrode layer 14 contains the positive electrode active material 12 and a positive electrode collector 22. The solid electrolyte layer 16 is located on one side of the positive electrode active material 12, and the positive electrode collector 22 is located on the other side of the positive electrode active material 12. The negative electrode layer 20 contains the negative electrode active material 18 and a negative electrode collector 24. The solid electrolyte layer 16 is located on one side of the negative electrode active material 18, and the negative electrode collector 24 is located on the other side of the negative electrode active material 18.

The positive electrode active material 12 is a polycrystalline body containing a plurality of particles of a lithium transition metal oxide, and the particles are oriented in a predetermined direction. The predetermined direction corresponds to a direction of the lithium ion conduction. In this embodiment, a layer 26 is composed of the positive electrode active material 12. In the layer 26, a predetermined crystal plane of each particle is oriented in a direction from the positive electrode layer 14 toward the negative electrode layer 20. The particles in the positive electrode active material 12 have a layered rock salt structure or a spinel structure.

Specifically, in the case of using the particles having the layered rock salt structure, it is preferred that the particles have a composition represented by the following general formula and are shaped into a plate having a thickness of about 2 to 100 $\mu$m.

General formula: $Li_p(Ni_x,Co_y,Al_z)O_2$

$(0.9 \le p \le 1.3, 0.6 < x < 0.9, 0.1 < y \le 0.3, 0 \le z \le 0.2, x + y + z = 1)$

It is particularly preferred that the above predetermined crystal plane, which is oriented in the direction from the positive electrode layer 14 toward the negative electrode layer 20, is a (003) plane. In this case, the resistance against the lithium ion emission from the positive electrode active material 12 and the lithium ion insertion into the positive electrode active material 12 can be lowered, a large amount of lithium ions can be emitted in a high input process (charging process), and a large amount of lithium ions can be introduced in a high output process (discharging process). A plane other than the (003) plane, such as a (101) or (104) plane, may be oriented along the surface of the positive electrode active material 12. For details of such particles, see Japanese Patent No. 4745463.

The lithium ion conducting material in the solid electrolyte layer 16 is preferably a garnet-, nitride-, perovskite-, phosphate-, sulfide-, or macromolecule-based material. In this embodiment, the lithium ion conducting material has a garnet-type or garnet-like-type crystal structure containing Li (lithium), La (lanthanum), Zr (zirconium), and O (oxygen). Specifically, for example, the lithium ion conducting material may have a garnet-type crystal structure containing $Li_7La_3Zr_2O_{12}$ (LLZ).

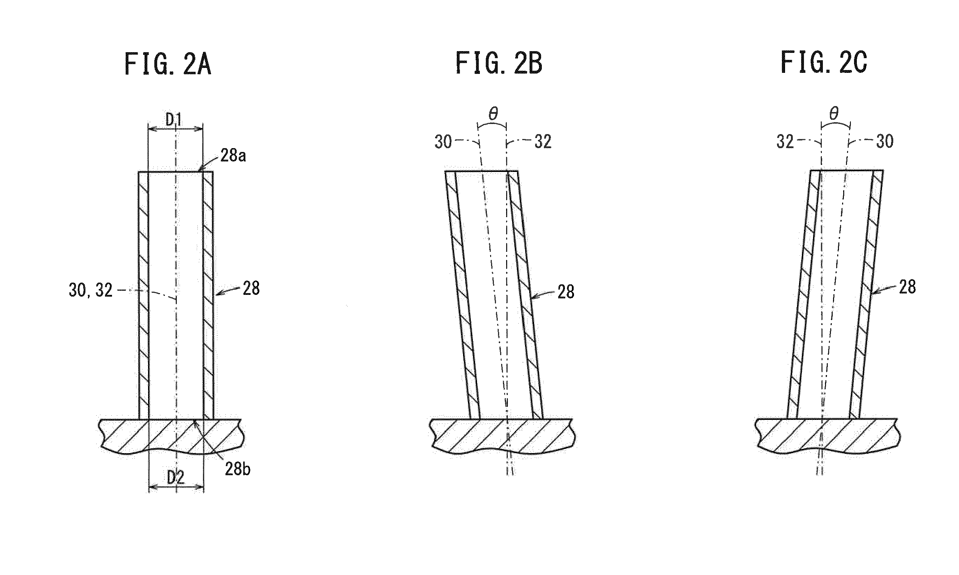

As shown in FIG. 1B, the negative electrode active material 18 contains a plurality of cylindrical carbon nanotube molecules 28, and the axes of the carbon nanotube molecules 28 are oriented in the above-described predetermined direction (the direction from the positive electrode layer 14 toward the negative electrode layer 20). The term "the axes of the carbon nanotube molecules 28 are oriented in the direction from the positive electrode layer 14 toward the negative electrode layer 20" means that a central axis 30 of each carbon nanotube molecule 28 corresponds to a vertical axis 32 extending from the positive electrode layer 14 to the negative electrode layer 20 as shown in FIG. 2A or that the central axis 30 is tilted at an angle θ to the vertical axis 32 as shown in FIGS. 2B and 2C, the angle θ having an absolute value $|\theta|$ of 10° or less ($|\theta| \leq 10°$).

As shown in e.g. FIG. 2A, the diameter D1 of an opening formed at one end of each carbon nanotube molecule 28 (one opening 28a) is approximately equal to the diameter D2 of an opening formed at the other end of the carbon nanotube molecule 28 (the other opening 28b). The term "approximately equal" means that the ratio (D1/D2) between the diameters D1 and D2 of the openings 28a and 28b is within the range of 0.9 to 1.1.

Examples of materials of the positive electrode collector 22 and the negative electrode collector 24 include platinum (Pt), platinum (Pt)/palladium (Pd), gold (Au), silver (Ag), aluminum (Al), copper (Cu), and ITO (indium-tin oxide).

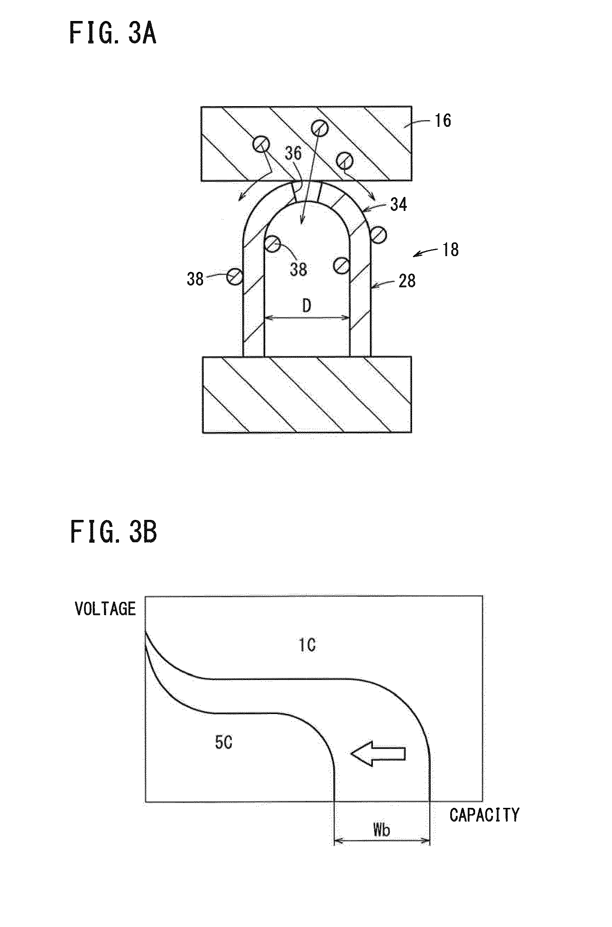

As schematically shown in FIG. 3A, in a conventional all-solid-state cell according to the above-described document such as Japanese Laid-Open Patent Publication No. 2008-181751, an ion path 36 is formed on a cap 34 of each carbon nanotube molecule 28. Though lithium ions 38 can be transferred through the ion path 36, the size of the ion path 36 is smaller than the inner diameter D of the carbon nanotube molecule 28. Therefore, in certain cases, only one, two, or three lithium ions 38 can be simultaneously transferred in a charging or discharging process, and the ion path 36 may act as a resistance against the lithium ion 38 emission from the negative electrode active material 18 and the lithium ion 38 insertion into the negative electrode active material 18. Consequently, for example, as schematically shown in the discharge rate characteristic diagram of FIG. 3B, the capacity C5 at a discharge rate 5C may be significantly lower than the capacity C1 at a discharge rate 1C.

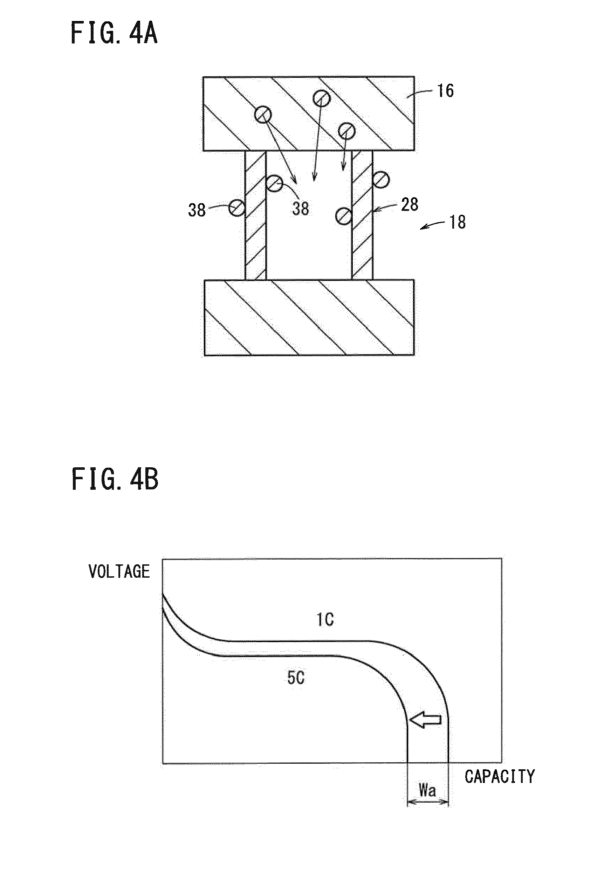

In contrast, as shown in FIG. 2A, in the all-solid-state cell 10 of this embodiment, the diameter D1 of the one opening 28a is approximately equal to the diameter D2 of the other opening 28b in each carbon nanotube molecule 28. Therefore, in the charging process, as shown in FIG. 4A, a large number of the lithium ions 38 can be readily introduced from the positive electrode active material 12 through the solid electrolyte layer 16 into the one opening 28a of the carbon nanotube molecule 28. Furthermore, in the discharging process, a large number of the lithium ions 38 can be readily emitted from the carbon nanotube molecule 28 through the one opening 28a to the positive electrode active material 12. Consequently, for example, as schematically shown in the discharge rate characteristic diagram of FIG. 4B, the capacity C5 at the discharge rate 5C is only slightly lower than the capacity C1 at the discharge rate 1C. The reduction Wa is 1/10 to 1/2 of the conventional reduction Wb shown in FIG. 3B. Thus, this embodiment is advantageous in rapid emission and insertion of the lithium ions 38 in the high output process.

An example of a method for producing each component of the all-solid-state cell of this embodiment will be described below.

[Positive Electrode Active Material 12]

A green sheet having a thickness of 20 μm or less, which contains an NiO powder, a $Co_3O_4$ powder, and an $Al_2O_3$ powder, is prepared. The green sheet is fired in an air atmosphere at a temperature of 1000°C to 1400°C for a predetermined time to form an independent film sheet (self-standing film) containing a large number of (h00)-oriented plate-like (Ni,Co,Al)O grains. In this step, by means of adding additives, such as $MnO_2$ or ZnO, grain growth is accelerated, resulting in enhancement of (h00) orientation of the plate-like crystal grains.

The "independent" sheet refers to a sheet that can be handled without supports after the firing. That is, the independent sheet does not include a sheet which is fixedly attached to another support member (substrate or the like) through firing and is thus integral with the support member (unseparable or difficult to be separated).

In such a self-standing-type green sheet in the form of a film, the amount of material present in the thickness direction is very small as compared with that in a particle plate surface direction, i.e., in an in-plane direction (a direction orthogonal to the thickness direction).

Thus, at the initial stage at which a plurality of particles are present in the thickness direction, grain growth progresses in random directions. As the material in the thickness direction is consumed with progress of grain growth, the direction of grain growth is limited to two-dimensional directions within the plane. Accordingly, grain growth in planar directions is reliably accelerated.

Particularly, by means of forming the green sheet to the smallest possible thickness (e.g., several μm or less) or accelerating grain growth to the greatest possible extent despite a relatively large thickness of about 100 μm (e.g., about 20 μm), grain growth in planar direction is more reliably accelerated. That is, the particles whose crystal faces having the low surface energy are present within the plane (i.e., in the in-plane direction, perpendicular to the thickness direction) preferentially undergo accelerated grain growth in planar direction.

Consequently, in the self-standing film obtained by firing the green sheet in the above manner, a large number of thin plate-like grains in which particular crystal faces are oriented in parallel with the plate surfaces of the grains are joined together at grain boundaries in planar directions. That is, there is formed a self-standing film in which the number of crystal grains in the thickness direction is substantially one. The meaning of "the number of crystal grains in the thickness direction is substantially one" does not exclude a state in which portions (e.g., end portions) of in-plane adjacent crystal grains overlie each other in the thickness direction. The self-standing film can become a dense ceramic sheet in which a large number of thin plate-like grains as mentioned above are joined together without clearance therebetween.

The (h00)-oriented (Ni,Co,Al)O ceramic sheet obtained by the above step is mixed with lithium nitrate (LiNO$_3$). The mixture is heated for a predetermined time, whereby lithium is introduced into the (Ni,Co,Al)O grains to obtain an Li(Ni$_{0.75}$Co$_{0.2}$Al$_{0.05}$)O$_2$ film sheet for the positive electrode active material 12. In the resultant sheet, the (003) plane is oriented in the direction from the positive electrode layer 14 toward the negative electrode layer 20, and the (104) plane is oriented along the sheet surface.

[Lithium Ion Conducting Material in Solid Electrolyte Layer 16]

A material containing an Li component, an La component, and a Zr component is fired in a first firing process to obtain a primary fired powder containing Li, La, Zr, and oxygen for synthesizing a ceramic. Then, the primary fired powder obtained by the first firing process is fired in a second firing process to prepare a ceramic having a garnet-type or garnet-like-type crystal structure containing Li, La, Zr, and oxygen. In this manner, a ceramic powder or a sintered body can be easily produced, which has an LLZ crystal structure and can contain aluminum so as to have a satisfactory sintered structure (density) for easy handling and to have conductivity.

(Li component, La component, and Zr component)

These components are not particularly limited, and may be appropriately selected from various salts of the metals such as oxides, hydroxides, and carbonates. For example, Li$_2$CO$_3$ or LiOH may be used as the Li component, La(OH)$_3$ or La$_2$O$_3$ may be used as the La component, and ZrO$_2$ may be used as the Zr component. Incidentally, the oxygen in the ceramic is generally derived from the metal compounds.

The amounts of the Li, La, and Zr components in the material for generating the ceramic may be such that the LLZ crystal structure can be formed from these components by a solid-phase reaction or the like. The ratio of the Li, La, and Zr components may be a stoichiometric composition ratio 7:3:2 of the LLZ or a ratio close to the stoichiometric composition ratio. In view of loss of the Li component, the amount of the Li component may be increased by about 10% from the stoichiometric Li molar quantity of the LLZ, and the amounts of the La and Zr components may correspond to the stoichiometric molar quantities of the LLZ. For example, the material may have a molar ratio Li:La:Zr of 7.7:3:2.

Specifically, in the case of using the compounds of Li$_2$CO$_3$, La(OH)$_3$, and ZrO$_2$, the material may have a molar ratio Li$_2$CO$_3$:La(OH)$_3$:ZrO$_2$ of approximately 3.85:3:2. In the case of using Li$_2$CO$_3$, La$_2$O$_3$, and ZrO$_2$, the material may have a molar ratio Li$_2$CO$_3$:La$_2$O$_3$:ZrO$_2$ of approximately 3.85:1.5:2. In the case of using LiOH, La(OH)$_3$, and ZrO$_2$, the material may have a molar ratio LiOH:La(OH)$_3$:ZrO$_2$ of approximately 7.7:3:2. In the case of using LiOH, La$_2$O$_3$, and ZrO$_2$, the material may have a molar ratio LiOH:La$_2$O$_3$:ZrO$_2$ of approximately 7.7:1.5:2.

The powder of the material may be appropriately prepared by a process used in a known ceramic powder synthesis method. For example, the components may be uniformly mixed in a mortar machine, a ball mill, or the like, to obtain the material.

(First firing process)

In the first firing process, at least the Li and La components and the like are thermally decomposed to obtain the primary fired powder. By preparing the primary fired powder, the LLZ crystal structure can be easily formed in the second firing process.

The LLZ crystal structure may be formed in the primary fired powder in the first firing process. The firing temperature is preferably 850°C to 1150°C. The first firing process may contain a step of heating at a lower temperature and a step of heating at a higher temperature within the above temperature range. In a case where such heating steps are performed, the ceramic powder can have a more uniform structure, and a high-quality sintered body can be produced in the second firing process. In the case of using a plurality of the heating steps in the first firing process, the material is preferably kneaded and ground after each heating step by a mortar machine, a ball mill, a vibrational mill, etc. The grinding is preferably carried out using a dry grinding method. Consequently, a more uniform LLZ phase can be formed in the second firing process.

The heating steps in the first firing process preferably contain a step of heating at 850°C to 950°C and a step of heating at 1075°C to 1150°C, more preferably contain a step of heating at 875°C to 925°C (further preferably at approximately 900°C) and a step of heating at 1100°C to 1150°C (further preferably at approximately 1125°C).

In the first firing process, it is preferred that the material is heated at the highest temperature, which is set as heating temperature, for about 10 to 15 hours in total. In the case of using two heating steps in the first firing process, it is preferred that the material is heated at the highest temperature for about 5 to 6 hours in each step.

One or more components in the starting material may be changed to shorten the time of the first firing process. For example, in the case of using LiOH as one component of the material, in a heating step at 850°C to 950°C, the LLZ crystal structure can be obtained by heating the material containing Li, La, and Zr at the highest temperature only for 10 hours or less. This is because the LiOH in the starting material forms a liquid phase at a low temperature and is readily reacted with another component at a lower temperature.

(Second firing process)

The primary fired powder prepared by the first firing process may be heated at a temperature of 950°C to 1250°C in the second firing process. In the second firing process, the ceramic having the composite oxide LLZ crystal structure can be produced by firing the primary fired powder prepared by the first firing process.

For example, the material containing Li, La, and Zr is heated at a temperature of 1125°C to 1250°C to obtain the LLZ crystal structure. In the case of using $Li_2CO_3$ as the Li component, the material is preferably heated at 1125°C to 1250°C. In this case, when the heating temperature is lower than 1125°C, a single LLZ phase is hardly formed, resulting in a low Li conductivity. When the heating temperature is higher than 1250°C, heterogeneous phase of $La_2Zr_2O_7$ or the like is formed, resulting in a low Li conductivity. In addition, the crystals are excessively grown, so that the resultant solid electrolyte often tends to fail to have a sufficient strength. The heating temperature is more preferably about 1180°C to 1230°C.

One or more components in the starting material may be changed to lower the temperature of the second firing process. For example, in the case of using LiOH as the lithium source in the starting material, the LLZ crystal structure can be obtained by heating the material containing Li, La, and Zr at a temperature of at least 950°C but lower than 1125°C. This is because the LiOH in the starting material forms a liquid phase at a low temperature and is readily reacted with another component at a lower temperature.

In the second firing process, the heating time is preferably about 18 to 50 hours at the above heating temperature. When the heating time is shorter than 18 hours, a satisfactory LLZ-based ceramic cannot be formed. When the heating time is longer than 50 hours, the material is often reacted with a setter through the intermediation of an embedding powder. In addition, the crystals are excessively grown, so that the resultant sample often fails to have a sufficient strength. The heating time is more preferably 30 hours or more.

The second firing process is preferably carried out after the primary fired powder is formed by a known pressing method into a desired three-dimensional shape or a compact (e.g., a shape with a size suitable for use as the solid electrolyte of the all-solid-state cell). In the case of preparing such a compact (formed body), the solid-phase reaction can be accelerated, and the sintered compact can be easily obtained. Alternatively, the sintered compact may be produced by preparing the ceramic powder in the second firing process, forming the ceramic powder into a compact after the second firing process, and further sintering the compact (formed body). The sintering may be carried out at the same temperature as the second firing process.

In a case where the compact of the primary fired powder is fired and sintered in the second firing process, the compact is preferably embedded in the same powder in the second firing process. By embedding the compact, the loss of Li can be reduced, and composition change by the second firing process can be prevented. In general, the compact of the material powder is placed on the material powder, and then embedded in the material powder. The compact can be prevented from reacting with the setter in this manner. The top and bottom of the compact may be pressed by the setter through the embedding powder if necessary, to prevent the warping of the sintered compact in the firing process.

In a case where the heating temperature of the second firing process is lowered, e.g., by using the LiOH as the lithium source, the compact of the primary fired powder can be sintered without embedding in the same powder. This is because the heating temperature of the second firing process is lowered, whereby the loss of Li can be relatively reduced, and the reaction with the setter can be prevented.

The solid electrolyte layer 16 having the LLZ crystal structure can be obtained by the above firing process. A solid electrolyte layer, which has a crystal structure and contains aluminum, may be produced by performing one or both of the first and second firing processes in the presence of aluminum (Al)-containing compound.

[Negative Electrode Active Material 18]

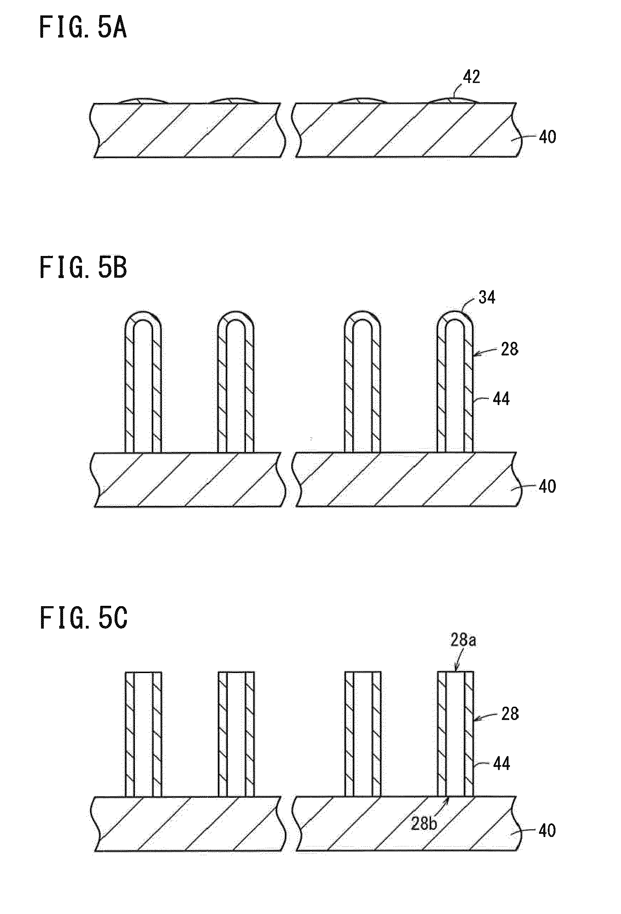

As shown in FIG. 5A, for example, an alumina, a quartz, or a thermally-oxidized film is disposed on a silicon substrate to prepare a substrate 40, and an iron catalyst is deposited on the entire surface of the substrate 40 to form a catalyst metal layer 42. Typically the iron catalyst is deposited by a RF plasma sputtering method, and the average thickness of the catalyst metal layer 42 may be 2.5 nm. The catalyst metal layer 42 is aggregated on the substrate 40 to form an island structure. Examples of the methods for depositing the catalyst metal layer 42 further include DC plasma sputtering methods, impactor methods, ALD (atomic layer deposition) methods, electron beam (EB) evaporation methods, and molecular beam epitaxy (MBE) methods.

Then, in the process of FIG. 5B, for example, a large number of the carbon nanotube molecules 28 are grown from the catalyst metal layer 42 by a hot-filament chemical vapor deposition (CVD) method. The hot-filament CVD method may be carried out under a pressure of 1 kPa, at a substrate temperature of 620°C to 650°C (e.g., 650°C), and under a flow of a mixture gas of acetylene and argon as a source gas. Incidentally, the catalyst metal layer 42 is not shown in FIG. 5B.

For example, the mixture gas may contain an acetylene gas and an argon gas, the volume ratio between the acetylene and argon may be 1:9, the mixture gas may be supplied at a flow rate of 200 sccm to a treatment vessel of a CVD apparatus, and a carrier gas may be simultaneously supplied at a flow rate of 100 sccm. A bundle of a large number of the carbon nanotube molecules 28 having a diameter of 5 to 20 nm (carbon nanotube array), which has an areal density of about $10^{10}$ to $10^{12}$ molecules per 1 $cm^2$, can be obtained in this manner.

In the process of FIG. 5B, the length of the carbon nanotube molecule 28 can be controlled by selecting the growth conditions and the growth time of the CVD apparatus. For example, in a case where the catalyst metal layer 42 has a thickness of 2.5 nm, the carbon nanotube molecule 28 can be grown to a length of approximately 150 $\mu$m within a growth time of 60 minutes. The grown carbon nanotube molecule 28 has a main portion 44, and further has an approximately hemispherical cap 34 formed at the end of the main portion 44.

Alternatively, the carbon nanotube molecule 28 may be grown by an arc discharge method, a laser ablation method, a remote plasma CVD method, a plasma CVD method, a thermal CVD method, an SiC surface decomposition method, etc. The material (source gas) for the carbon nanotube molecule 28 is not limited to the above acetylene gas, and may contain a hydrocarbon such as methane or ethylene, an alcohol such as ethanol or methanol, etc. Furthermore, the catalyst for the catalyst metal layer 42 is not limited to the iron, and may be cobalt, nickel, iron, gold, silver, platinum, or an alloy thereof.

In addition to the catalyst metal layer 42, a metal or alloy containing at least one of molybdenum, titanium, hafnium, zirconium, niobium, vanadium, tantalum nitride, titanium nitride, hafnium nitride, zirconium nitride, niobium nitride, vanadium nitride, titanium silicide, tantalum silicide, tungsten nitride, aluminum, aluminum nitride, aluminum oxide, molybdenum oxide, titanium oxide, tantalum oxide, hafnium oxide, zirconium oxide, niobium oxide, vanadium oxide, tungsten oxide, tantalum, tungsten, copper, gold, platinum, and the like may be used as an underlayer metal, an upper metal, or both thereof.

In this embodiment, after the carbon nanotube molecules 28 are grown as shown in FIG. 5B, the caps 34 are removed by heating the carbon nanotube molecules 28 at a temperature of 450°C to 650°C in an oxygen or air atmosphere in the process of FIG. 5C. In each carbon nanotube molecule 28, the cap 34 is selectively burned and readily removed by the heating in the oxygen-containing atmosphere. This is because the cap 34 is mainly composed of 5-membered rings having a chemically active double bond. A carbon atom in the double bond is preferentially reacted with an oxygen atom (oxidized), and the generated carbon monoxide, carbon dioxide, or the like is readily removed. When one carbon atom is removed in this manner, the resultant defected portion exhibits a higher activity. Therefore, an oxidation reaction continuously proceeds, so that the entire cap 34 is removed. Consequently, in the resultant carbon nanotube molecule 28, the diameter D1 of the one opening 28a is approximately equal to the diameter D2 of the other opening 28b.

For example, the heating in the process of FIG. 5C may be carried out at a substrate temperature of 550°C under an oxygen pressure of 1 kPa. Instead of the heating treatment, an oxygen plasma treatment or the like may be performed at room temperature to achieve the removal. For example, the cap 34 can be removed by performing the oxygen plasma treatment under a power of 200 W for 10 minutes. Alternatively, the carbon nanotube molecules 28 may be covered with a resin, and then the caps 34 may be removed together with the resin by a chemical mechanical polishing (CMP) method.

[Modification Example]

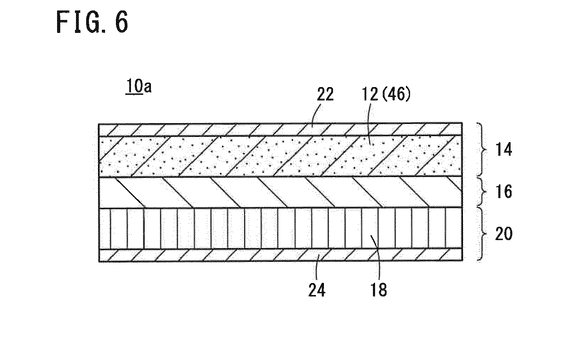

In the above-described embodiment, in the layer 26 of the positive electrode active material 12, the (003) planes of the particles having the layered rock salt structure represented by the above general formula are oriented in the direction from the positive electrode layer 14 toward the negative electrode layer 20. Alternatively, as shown in FIG. 6, in an all-solid-state cell 10a according to a modification example, a layer 46 may be formed as the positive electrode active material 12 by mixing the particles having the layered rock salt structure represented by the general formula with the particles for the solid electrolyte layer, and by press-forming the mixture.

[First Example]

In all-solid-state cells of Example 1, Example 2, Reference Example 1, and Comparative Example 1, changes of the volumetric energy densities with respect to various thicknesses of the solid electrolyte layer 16 were evaluated by a simulation test.

In First Example, when each all-solid-state cell was observed from above, both the horizontal and vertical lengths of the cell were 10 mm, and the thickness of the positive electrode active material 12 was 50 $\mu$m.

Characteristics of Example 1, Example 2, Reference Example 1, and Comparative Example 1 will be described below.

<Example 1>

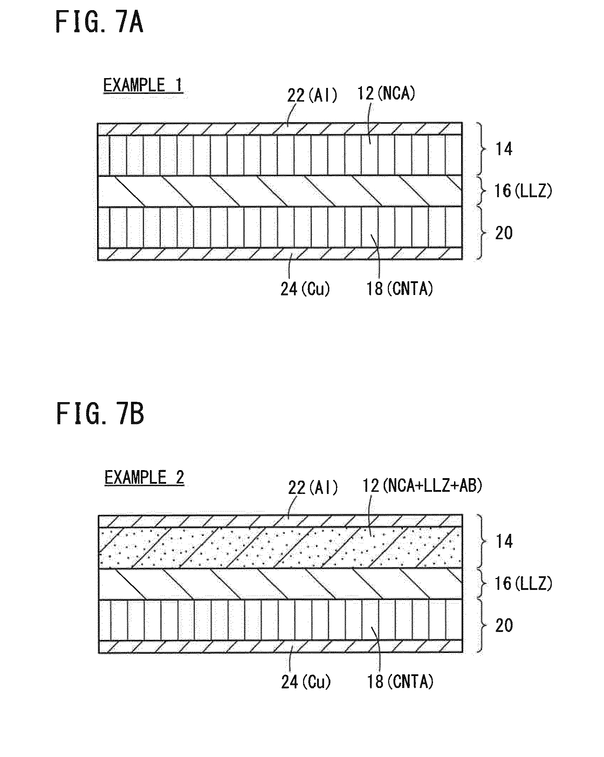

As shown in FIG. 7A, the all-solid-state cell of Example 1 had the same structure as the all-solid-state cell 10 of the above embodiment (see FIG. 1).

The positive electrode active material 12 contained layered rock salt-type particles having a composition of Li(Ni$_{0.8}$Co$_{0.15}$Al$_{0.05}$)O$_2$ (hereinafter simply referred to as NCA), and the (003) planes of the particles were oriented in the direction from the positive electrode layer 14 toward the negative electrode layer 20. The positive electrode active material 12 had a thickness of 50 $\mu$m.

The lithium ion conducting material in the solid electrolyte layer 16 contained garnet-type crystals having a composition of Li$_7$La$_3$Zr$_2$O$_{12}$ (hereinafter simply referred to as LLZ).

The negative electrode active material 18 contained a carbon nanotube array of a plurality of cylindrical carbon nanotube molecules 28 (hereinafter referred to as CNTA). The axes of the carbon nanotube molecules 28 were oriented in the direction from the positive electrode layer 14 toward the negative electrode layer 20. The density of the carbon nanotube molecules 28 was 0.0014 g/mm$^3$.

The thickness of the negative electrode active material 18 was obtained as follows. It was assumed that the lithium ion loss ratio of the positive electrode active material 12 (NCA) was 0.7, and that lithium ions eliminated from the positive electrode active material 12 were stored (occluded) in an LiC$_2$ composition in the carbon nanotube molecules 28. The mass of the necessary carbon nanotube molecules 28 in the cell was calculated and divided by the above density to obtain the volume of the negative electrode active material 18 in the cell. The volume was divided by the area (10 mm × 10 mm) to obtain the thickness of the negative electrode active material 18.

A 10-$\mu$m-thick aluminum foil was used as the positive electrode collector 22, and a 10-$\mu$m-thick copper foil was used as the negative electrode collector 24.

The characteristics of Example 1 used in the simulation are shown in Table 1.

Table 1

| | Molecular weight | Density (g/mm$^3$) | Thickness ($\mu$m) | Weight in cell (g) | Volume in cell (mm$^3$) |
|---|---|---|---|---|---|
| Positive electrode active material (NCA) | 96.08 | 0.0041 | 50 | 0.0204 | 5 |
| Solid electrolyte layer (LLZ) | | 0.0052 | 200 | 0.1040 | 20 |
| Negative electrode active material (CNTA) | 12.01 | 0.0014 | 26 | 0.0036 | 3 |
| Positive electrode collector (Al) | 26.98 | 0.0027 | 10 | 0.0027 | 1 |
| Negative electrode collector (Cu) | 63.55 | 0.0089 | 10 | 0.0089 | 1 |

In the calculation of the volumetric energy density, a constant voltage of 3.9 V was used. The capacity (mAh) was obtained using the following expression (1):

$$(W_{NCA}/M_{NCA}) \times r \times F \times 1000/3600 \ldots (1)$$

wherein $W_{NCA}$ was the mass of the NCA in the positive electrode active material 12 in the cell, $M_{NCA}$ was the molecular weight of the NCA in the positive electrode active material 12, r was the lithium ion loss ratio (= 0.7), and F was the Faraday constant.

The volumetric energy density was obtained using the following expression (2):

$$(E \times C)/\{(Vpe + Vne + Val + Vcu + Vx)/1000\} \ldots (2)$$

wherein E was the voltage (= 3.9 V), C was the capacity (mAh), Vpe was the volume ($mm^3$) of the positive electrode active material 12 in the cell, Vne was the volume ($mm^3$) of the negative electrode active material 18 in the cell, Val was the volume ($mm^3$) of the positive electrode collector 22 (Al) in the cell, Vcu was the volume ($mm^3$) of the negative electrode collector 24 (Cu) in the cell, and Vx was the volume ($mm^3$) of the solid electrolyte layer 16 (LLZ) in the cell.

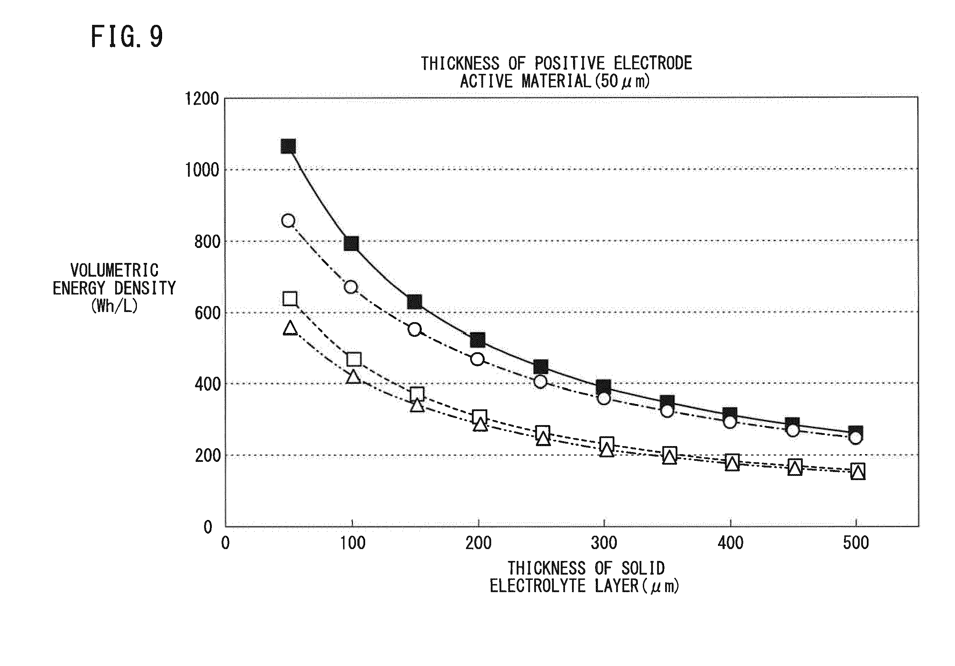

The simulation was carried out using the solid electrolyte layer 16 thicknesses of 50, 100, 150, 200, 250, 300, 350, 400, 450, and 500 $\mu$m. The results are shown by black squares in FIG. 9.

<Example 2>

As shown in FIG. 7B, in the all-solid-state cell of Example 2, the negative electrode active material 18 contained the CNTA of a large number of the oriented carbon nanotube molecules 28, and the solid electrolyte layer 16 contained the LLZ, in the same manner as Example 1. However, the all-solid-state cell of Example 2 was different from that of Example 1 in the positive electrode active materials 12.

In Example 2, the positive electrode active material 12 was prepared by mixing and press-forming the positive electrode active material NCA, the solid electrolyte material LLZ, and a conductive aid of an acetylene black (hereinafter referred to as AB). The mixture had an NCA ratio of 60%, an LLZ ratio of 30%, and an AB ratio of 10%, by mass. Thus, the NCA was not oriented. The positive electrode active material 12 had a thickness of 50 $\mu$m.

The thickness of the negative electrode active material 18 was obtained as follows. It was assumed that the lithium ion loss ratio of the NCA in the positive electrode active material 12 was 0.7, and that lithium ions eliminated from the NCA were stored (occluded) in an $LiC_2$ composition in the carbon nanotube molecules 28. The mass of the necessary carbon nanotube molecules 28 in the cell was calculated and divided by the above density to obtain the volume of the negative electrode active material 18 in the cell. The volume was divided by the area ($10 \times 10$ mm) to obtain the thickness of the negative electrode active material 18.

The characteristics of Example 2 used in the simulation are shown in Table 2.

Table 2

| | | Molecular weight | Density ($g/mm^3$) | Thickness ($\mu$m) | Weight in cell (g) | Volume in cell ($mm^3$) |
|---|---|---|---|---|---|---|
| Positive electrode active material | NCA | 96.08 | 0.0041 | 28 | 0.0114 | 3 |
| | LLZ (mixed) | | 0.0052 | 11 | 0.0057 | 1 |
| | AB | 12.01 | 0.0017 | 11 | 0.0019 | 1 |
| Solid electrolyte layer (LLZ) | | | 0.0052 | 200 | 0.1040 | 20 |
| Negative electrode active material (CNTA) | | 12.01 | 0.0014 | 17 | 0.0020 | 1 |
| Positive electrode collector (Al) | | 26.98 | 0.0027 | 10 | 0.0027 | 1 |
| Negative electrode collector (Cu) | | 63.55 | 0.0089 | 10 | 0.0089 | 1 |

The volumetric energy density was obtained using the above expression (2).

The simulation was carried out while increasing the solid electrolyte layer 16 thickness by 50 $\mu$m. The results are shown by white squares in FIG. 9.

<Reference Example 1>

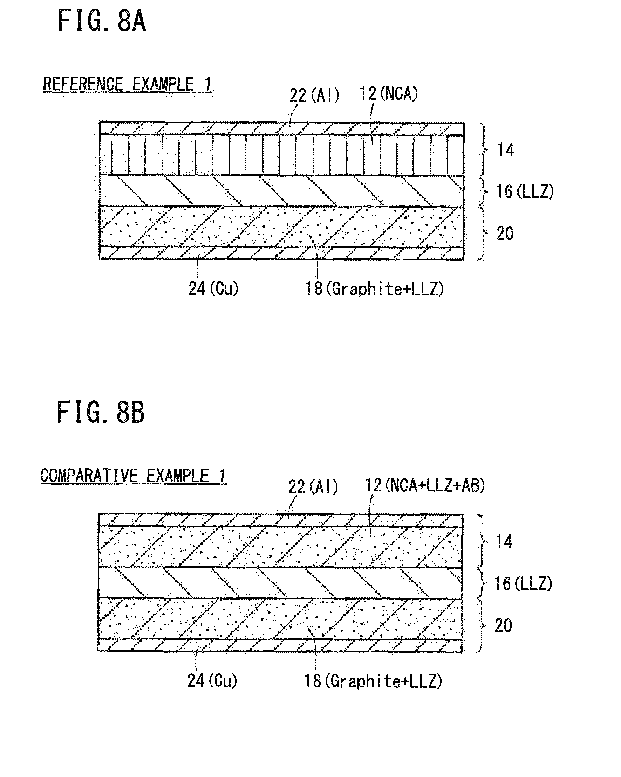

As shown in FIG. 8A, in the all-solid-state cell of Reference Example 1, the positive electrode active material 12 contained the oriented NCA, and the solid electrolyte layer 16 contained the LLZ, in the same manner as Example 1. However, the all-solid-state cell of Reference Example 1 was different from that of Example 1 in the negative electrode active materials 18.

In Reference Example 1, the negative electrode active material 18 was prepared by mixing and press-forming a negative electrode active material graphite and the solid electrolyte material LLZ. The mixture had a graphite ratio of 60% and an LLZ ratio of 40% by mass.

The thickness of the negative electrode active material 18 was obtained as follows. It was assumed that the lithium ion loss ratio of the positive electrode active material 12 (NCA) was 0.7, and lithium ions eliminated from the positive electrode active material 12 were stored (occluded) in an $LiC_6$ composition in the graphite. The mass of the necessary graphite in the cell was calculated and divided by a graphite density ($0.0023$ g/mm$^3$) to obtain the volume of the negative electrode active material 18 in the cell. The volume was divided by the area (10 mm $\times$ 10 mm) to obtain the thickness of the negative electrode active material 18.

The characteristics of Reference Example 1 used in the simulation are shown in Table 3.

Table 3

| | | Molecular weight | Density (g/mm$^3$) | Thickness ($\mu$m) | Weight in cell (g) | Volume in cell (mm$^3$) |
|---|---|---|---|---|---|---|
| Positive electrode active material (NCA) | | 96.08 | 0.0041 | 50 | 0.0204 | 5 |
| Solid electrolyte layer (LLZ) | | | 0.0052 | 200 | 0.1040 | 20 |
| Negative electrode active material | Graphite | 12.01 | 0.0023 | 47 | 0.0107 | 5 |
| | LLZ (mixed) | | 0.0052 | 13 | 0.0071 | 1 |
| Positive electrode collector (Al) | | 26.98 | 0.0027 | 10 | 0.0027 | 1 |
| Negative electrode collector (Cu) | | 63.55 | 0.0089 | 10 | 0.0089 | 1 |

The volumetric energy density was obtained using the above expression (2).

The simulation was carried out while increasing the solid electrolyte layer 16 thickness by 50 $\mu$m. The results are shown by white circles in FIG. 9.

<Comparative Example 1>

As shown in FIG. 8B, in the all-solid-state cell of Comparative Example 1, the positive electrode active material 12 was prepared by mixing and press-forming the NCA, LLZ, and AB in the same manner as Example 2, and the negative electrode active material 18 was prepared by mixing and press-forming the graphite and LLZ in the same manner as Reference Example 1.

The thickness of the negative electrode active material 18 was obtained as follows. It was assumed that the lithium ion loss ratio of the NCA in the positive electrode active material 12 was 0.7, and lithium ions eliminated from the NCA were stored (occluded) in an $LiC_6$ composition in the graphite. The mass of the necessary graphite in the cell was calculated and divided by the graphite density ($0.0023$ g/mm$^3$) to obtain the volume of the negative electrode active material 18 in the cell. The volume was divided by the area (10 mm $\times$ 10 mm) to obtain the thickness of the negative electrode active material 18.

The characteristics of Comparative Example 1 used in the simulation are shown in Table 4.

Table 4

|  |  | Molecular weight | Density (g/mm$^3$) | Thickness (μm) | Weight in cell (g) | Volume in cell (mm$^3$) |
|---|---|---|---|---|---|---|
| Positive electrode active material | NCA | 96.08 | 0.0041 | 28 | 0.0114 | 3 |
|  | LLZ (mixed) |  | 0.0052 | 11 | 0.0057 | 1 |
|  | AB | 12.01 | 0.0017 | 11 | 0.0019 | 1 |
| Solid electrolyte layer (LLZ) |  |  | 0.0052 | 200 | 0.1040 | 20 |
| Negative electrode active material | Graphite | 12.01 | 0.0023 | 26 | 0.0060 | 3 |
|  | LLZ (mixed) |  | 0.0052 | 8 | 0.0040 | 1 |
| Positive electrode collector (Al) |  | 26.98 | 0.0027 | 10 | 0.0027 | 1 |
| Negative electrode collector (Cu) |  | 63.55 | 0.0089 | 10 | 0.0089 | 1 |

The volumetric energy density was obtained using the above expression (2).

The simulation was carried out while increasing the solid electrolyte layer 16 thickness by 50 μm. The results are shown by white triangles in FIG. 9.

(Consideration)

As shown in FIG. 9, over the thickness range of 50 to 500 μm of the solid electrolyte layer 16, the volumetric energy density of Example 1 was higher than those of Example 2, Reference Example 1, and Comparative Example 1. This was because the positive electrode active material 12 contained only the NCA and the negative electrode active material 18 contained only the CNTA.

Furthermore, in Example 1, the positive electrode active material 12 was oriented in the direction from the positive electrode layer 14 toward the negative electrode layer 20. Therefore, the resistance against the lithium ion emission from the positive electrode active material 12 and the lithium ion insertion into the positive electrode active material 12 was lowered, a large amount of lithium ions could be emitted in a high input process (charging process), and a large amount of lithium ions could be introduced in a high output process (discharging process).

In addition, in Example 1, the axes of the carbon nanotube molecules 28 in the negative electrode active material 18 were oriented in the direction from the positive electrode layer 14 toward the negative electrode layer 20, and the diameter D1 of the one opening 28a was approximately equal to the diameter D2 of the other opening 28b. Therefore, the resistance against the lithium ion emission from the negative electrode active material 18 and the lithium ion insertion into the negative electrode active material 18 was lowered. Thus, in the charging process, a large number of lithium ions could be readily introduced from the positive electrode active material 12 into the one opening 28a of the carbon nanotube molecule 28. Furthermore, in the discharging process, a large number of lithium ions could be readily emitted from the carbon nanotube molecule 28 through the one opening 28a to the positive electrode active material 12.

The volumetric energy density of Example 2 was higher than that of Comparative Example 1. However, the volumetric energy density of Example 2 was lower than that of Reference Example 1, though the volume of the negative electrode active material 18 in the cell of Example 2 was smaller than that of Reference Example 1. It was considered that the positive electrode active material 12 of Reference Example 1 contained only the NCA, whereby a high capacity was achieved. In comparison between above Example 2 and Examples 4 and 6 to be hereinafter described, it was found that the improvement of the volumetric energy density with respect to the thickness of the positive electrode active material 12 was larger than that in Reference Examples 1, 2, and 3. This will be described below.

[Second Example]

In all-solid-state cells of Example 3, Example 4, Reference Example 2, and Comparative Example 2, changes of the volumetric energy densities with respect to various thicknesses of the solid electrolyte layer 16 were evaluated by a simulation test.

The cell structures of Example 3, Example 4, Reference Example 2, and Comparative Example 2 were approximately equal to those of Example 1, Example 2, Reference Example 1, and Comparative Example 1 of First Example, respectively. However, the thickness of each positive electrode active material 12 was 100 $\mu$m in Second Example, while the thickness was 50 $\mu$m in First Example.

Characteristics of Example 3, Example 4, Reference Example 2, and Comparative Example 2 are shown in Tables 5 to 8.

Table 5

| | Molecular weight | Density (g/mm$^3$) | Thickness ($\mu$m) | Weight in cell (g) | Volume in cell (mm$^3$) |
|---|---|---|---|---|---|
| Positive electrode active material (NCA) | 96.08 | 0.0041 | 100 | 0.0408 | 10 |
| Solid electrolyte layer (LLZ) | | 0.0052 | 200 | 0.1040 | 20 |
| Negative electrode active material (CNTA) | 12.01 | 0.0014 | 51 | 0.0071 | 5 |
| Positive electrode collector (Al) | 26.98 | 0.0027 | 10 | 0.0027 | 1 |
| Negative electrode collector (Cu) | 63.55 | 0.0089 | 10 | 0.0089 | 1 |

Table 6

| | | Molecular weight | Density (g/mm$^3$) | Thickness ($\mu$m) | Weight in cell (g) | Volume in cell (mm$^3$) |
|---|---|---|---|---|---|---|
| Positive electrode active material | NCA | 96.08 | 0.0041 | 56 | 0.0228 | 6 |
| | LLZ (mixed) | | 0.0052 | 22 | 0.0114 | 2 |
| | AB | 12.01 | 0.0017 | 22 | 0.0038 | 2 |
| Solid electrolyte layer (LLZ) | | | 0.0052 | 200 | 0.1040 | 20 |
| Negative electrode active material (CNTA) | | 12.01 | 0.0014 | 29 | 0.0040 | 3 |
| Positive electrode collector (Al) | | 26.98 | 0.0027 | 10 | 0.0027 | 1 |
| Negative electrode collector (Cu) | | 63.55 | 0.0089 | 10 | 0.0089 | 1 |

Table 7

| | Molecular weight | Density (g/mm$^3$) | Thickness ($\mu$m) | Weight in cell (g) | Volume in cell (mm$^3$) |
|---|---|---|---|---|---|
| Positive electrode active material (NCA) | 96.08 | 0.0041 | 100 | 0.0408 | 10 |
| Solid electrolyte layer (LLZ) | | 0.0052 | 200 | 0.1040 | 20 |

(continued)

| | | Molecular weight | Density (g/mm$^3$) | Thickness ($\mu$m) | Weight in cell (g) | Volume in cell (mm$^3$) |
|---|---|---|---|---|---|---|
| Negative electrode active material | Graphite | 12.01 | 0.0023 | 93 | 0.0214 | 9 |
| | LLZ (mixed) | | 0.0052 | 27 | 0.0143 | 3 |
| Positive electrode collector (Al) | | 26.98 | 0.0027 | 10 | 0.0027 | 1 |
| Negative electrode collector (Cu) | | 63.55 | 0.0089 | 10 | 0.0089 | 1 |

Table 8

| | | Molecular weight | Density (g/mm$^3$) | Thickness ($\mu$m) | Weight in cell (g) | Volume in cell (mm$^3$) |
|---|---|---|---|---|---|---|
| Positive electrode active material | NCA | 96.08 | 0.0041 | 55 | 0.0224 | 6 |
| | LLZ (mixed) | | 0.0052 | 23 | 0.0112 | 2 |
| | AB | 12.01 | 0.0017 | 22 | 0.0037 | 2 |
| Solid electrolyte layer (LLZ) | | | 0.0052 | 200 | 0.1040 | 20 |
| Negative electrode active material | Graphite | 12.01 | 0.0023 | 51 | 0.0118 | 5 |
| | LLZ (mixed) | | 0.0052 | 15 | 0.0079 | 2 |
| Positive electrode collector (Al) | | 26.98 | 0.0027 | 10 | 0.0027 | 1 |
| Negative electrode collector (Cu) | | 63.55 | 0.0089 | 10 | 0.0089 | 1 |

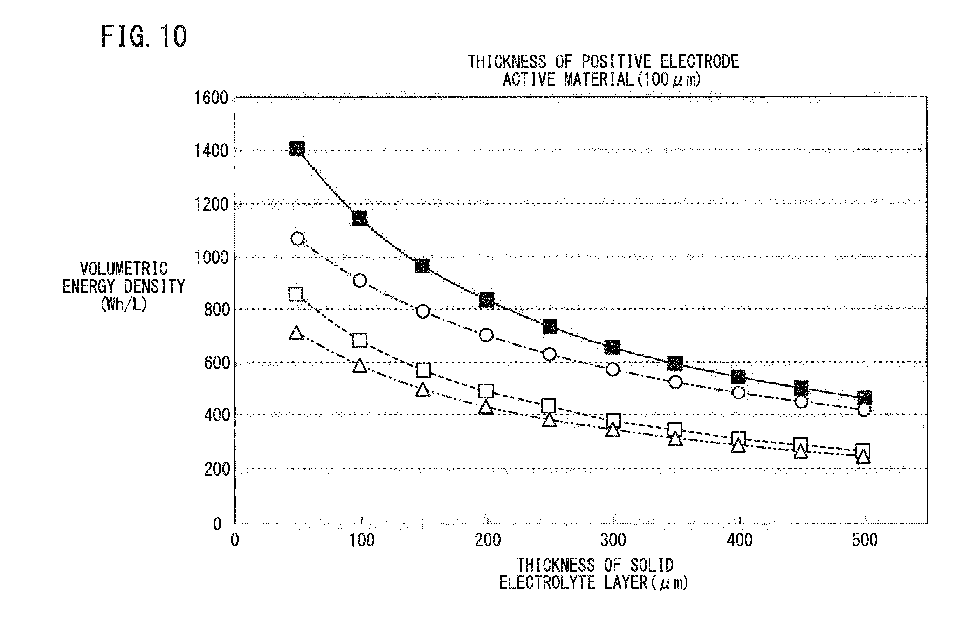

The simulation was carried out while increasing the thickness of the solid electrolyte layer 16 by 50 $\mu$m. The results are shown in FIG. 10. In FIG. 10, the results of Example 3 are shown by black squares, the results of Example 4 are shown by white squares, the results of Reference Example 2 are shown by white circles, and the results of Comparative Example 2 are shown by white triangles.

(Consideration)

As shown in FIG. 10, over the thickness range of 50 to 500 $\mu$m of the solid electrolyte layer 16, the volumetric energy density of Example 3 was higher than those of Example 4, Reference Example 2, and Comparative Example 2. This was because of the same reason as Example 1.

The volumetric energy density of Example 4 was higher than that of Comparative Example 2. However, similarly to First Example, the volumetric energy density of Example 4 was lower than that of Reference Example 2, though the volume of the negative electrode active material 18 in the cell of Example 4 was smaller than that of Reference Example 2. It was considered that the positive electrode active material 12 of Reference Example 2 contained only the NCA, whereby a high capacity was achieved.

[Third Example]

In all-solid-state cells of Example 5, Example 6, Reference Example 3, and Comparative Example 3, changes of the volumetric energy densities with respect to various thicknesses of the solid electrolyte layer 16 were evaluated by a simulation test.

The cell structures of Example 5, Example 6, Reference Example 3, and Comparative Example 3 were approximately equal to those of Example 1, Example 2, Reference Example 1, and Comparative Example 1 of First Example, respectively. However, the thickness of each positive electrode active material 12 was 200 μm in Third Example, while the thickness was 50 μm in First Example.

Characteristics of Example 5, Example 6, Reference Example 3, and Comparative Example 3 are shown in Tables 9 to 12.

Table 9

| | Molecular weight | Density (g/mm$^3$) | Thickness (μm) | Weight in cell (g) | Volume in cell (mm$^3$) |
|---|---|---|---|---|---|
| Positive electrode active material (NCA) | 96.08 | 0.0041 | 200 | 0.0816 | 20 |
| Solid electrolyte layer (LLZ) | | 0.0052 | 200 | 0.1040 | 20 |
| Negative electrode active material (CNTA) | 12.01 | 0.0014 | 102 | 0.0143 | 10 |
| Positive electrode collector (Al) | 26.98 | 0.0027 | 10 | 0.0027 | 1 |
| Negative electrode collector (Cu) | 63.55 | 0.0089 | 10 | 0.0089 | 1 |

Table 10

| | | Molecular weight | Density (g/mm$^3$) | Thickness (μm) | Weight in cell (g) | Volume in cell (mm$^3$) |
|---|---|---|---|---|---|---|
| Positive electrode active material | NCA | 96.08 | 0.0041 | 111 | 0.0453 | 11 |
| | LLZ (mixed) | | 0.0052 | 45 | 0.0226 | 4 |
| | AB | 12.01 | 0.0017 | 44 | 0.0075 | 4 |
| Solid electrolyte layer (LLZ) | | | 0.0052 | 200 | 0.1040 | 20 |
| Negative electrode active material (CNTA) | | 12.01 | 0.0014 | 57 | 0.0079 | 6 |
| Positive electrode collector (Al) | | 26.98 | 0.0027 | 10 | 0.0027 | 1 |
| Negative electrode collector (Cu) | | 63.55 | 0.0089 | 10 | 0.0089 | 1 |

Table 11

| | Molecular weight | Density (g/mm$^3$) | Thickness (μm) | Weight in cell (g) | Volume in cell (mm$^3$) |
|---|---|---|---|---|---|
| Positive electrode active material (NCA) | 96.08 | 0.0041 | 200 | 0.0816 | 20 |
| Solid electrolyte layer (LLZ) | | 0.0052 | 200 | 0.1040 | 20 |

(continued)

| | | Molecular weight | Density (g/mm$^3$) | Thickness ($\mu$m) | Weight in cell (g) | Volume in cell (mm$^3$) |
|---|---|---|---|---|---|---|
| Negative electrode active material | Graphite | 12.01 | 0.0023 | 186 | 0.0428 | 19 |
| | LLZ (mixed) | | 0.0052 | 55 | 0.0286 | 5 |
| Positive electrode collector (Al) | | 26.98 | 0.0027 | 10 | 0.0027 | 1 |
| Negative electrode collector (Cu) | | 63.55 | 0.0089 | 10 | 0.0089 | 1 |

Table 12

| | | Molecular weight | Density (g/mm$^3$) | Thickness ($\mu$m) | Weight in cell (g) | Volume in cell (mm$^3$) |
|---|---|---|---|---|---|---|
| Positive electrode active material | NCA | 96.08 | 0.0041 | 111 | 0.0453 | 11 |
| | LLZ (mixed) | | 0.0052 | 45 | 0.0226 | 4 |
| | AB | 12.01 | 0.0017 | 44 | 0.0075 | 4 |
| Solid electrolyte layer (LLZ) | | | 0.0052 | 200 | 0.1040 | 20 |
| Negative electrode active material | Graphite | 12.01 | 0.0023 | 103 | 0.0238 | 10 |
| | LLZ (mixed) | | 0.0052 | 30 | 0.0159 | 3 |
| Positive electrode collector (Al) | | 26.98 | 0.0027 | 10 | 0.0027 | 1 |
| Negative electrode collector (Cu) | | 63.55 | 0.0089 | 10 | 0.0089 | 1 |

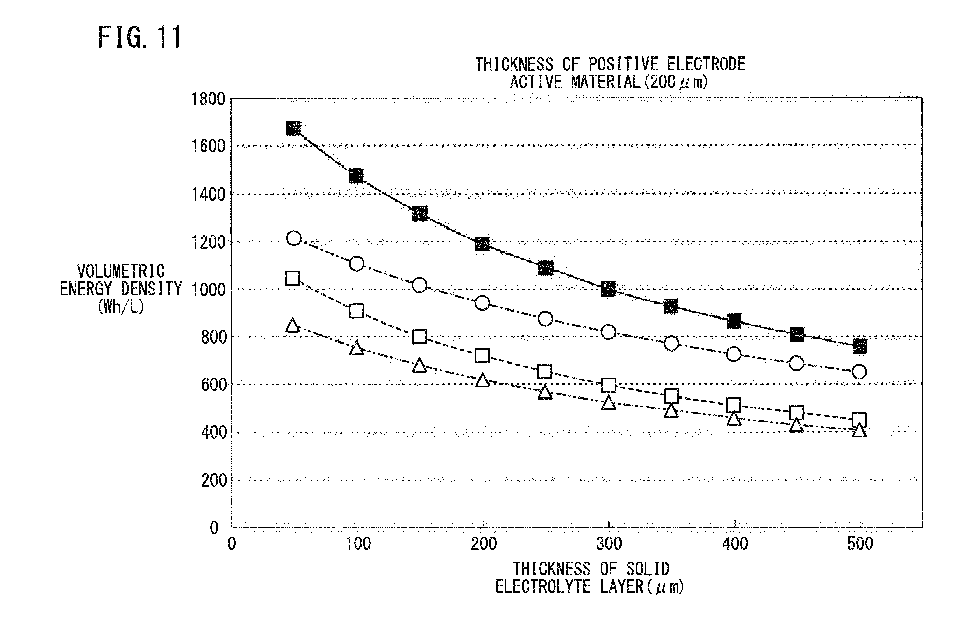

The simulation was carried out while increasing the thickness of the solid electrolyte layer 16 by 50 $\mu$m. The results are shown in FIG. 11. In FIG. 11, the results of Example 5 are shown by black squares, the results of Example 6 are shown by white squares, the results of Reference Example 3 are shown by white circles, and the results of Comparative Example 3 are shown by white triangles.

(Consideration)

As shown in FIG. 11, over the thickness range of 50 to 500 $\mu$m of the solid electrolyte layer 16, the volumetric energy density of Example 5 was higher than those of Example 6, Reference Example 3, and Comparative Example 3. This was because of the same reason as Example 1.

The volumetric energy density of Example 6 was higher than that of Comparative Example 3. However, similarly to First Example, the volumetric energy density of Example 6 was lower than that of Reference Example 3, though the volume of the negative electrode active material 18 in the cell of Example 6 was smaller than that of Reference Example 3. It was considered that the positive electrode active material 12 of Reference Example 3 contained only the NCA, whereby a high capacity was achieved.

In Examples 2, 4, and 6 and Reference Examples 1, 2, and 3, the volumetric energy density improvement rate was evaluated with respect to the thickness of the positive electrode active material 12. Specifically, the volumetric energy density values of Examples 2, 4, and 6 and Reference Examples 1, 2, and 3 were evaluated under a condition of the solid electrolyte layer 16 thickness of 50 $\mu$m.

The volumetric energy density value of Example 2 was 646.99 Wh/L, that of Example 4 was 874.65 Wh/L, and that of Example 6 was 1059.36 Wh/L. Meanwhile, the volumetric energy density value of Reference Example 1 was 863.18 Wh/L, that of Reference Example 2 was 1069.21 Wh/L, and that of Reference Example 3 was 1215.62 Wh/L.

In comparison between Examples 2 and 4, the improvement rate was {(874.65 - 646.99)/646.99} $\times$ 100 = approximately 35%. In comparison between Examples 2 and 6, the improvement rate was {(1059.36 - 646.99)/646.99} $\times$ 100 = approximately 64%. On the other hand, in comparison between Reference Examples 1 and 2, the improvement rate was {(1069.21 - 863.18)/863.18} $\times$ 100 = approximately 24%. In comparison between Reference Examples 1 and 3, the improvement rate was {(1215.62 - 863.18)/863.18} $\times$ 100 = approximately 41%.

Thus, the cells of Examples 2, 4, and 6 exhibited higher volumetric energy density improvement rates with respect to the positive electrode active material thickness as compared with Reference Examples 1 to 3. Consequently, in Examples 2, 4, and 6, the dynamic range of the volumetric energy density can be expanded in a certain thickness range, and the cell design possibility can be expanded.

**Claims**

1. An all-solid-state cell (10) comprising a positive electrode layer (14) containing a positive electrode active material (12), a solid electrolyte layer (16) containing a lithium ion conducting material, and a negative electrode layer (20) containing a negative electrode active material (18), wherein
the negative electrode active material (18) in the negative electrode layer (20) contains a plurality of cylindrical carbon nanotube molecules (28), and axes of the carbon nanotube molecules (28) are oriented in a predetermined direction.

2. The all-solid-state cell according to claim 1, wherein
the positive electrode active material (12) in the positive electrode layer (14) is a polycrystalline body containing a plurality of lithium transition metal oxide particles, and the particles are oriented in the predetermined direction.

3. The all-solid-state cell according to claim 1 or 2, wherein
the predetermined direction is a direction of lithium ion conduction.

4. The all-solid-state cell according to any one of claims 1 to 3, wherein
the predetermined direction is a direction from the positive electrode layer (14) toward the negative electrode layer (20).

5. The all-solid-state cell according to any one of claims 1 to 4, wherein
a diameter (D1) of an opening (28a) formed at one end of the carbon nanotube molecule (28) is approximately equal to a diameter (D2) of an opening (28b) formed at another end of the carbon nanotube molecule (28).

6. The all-solid-state cell according to any one of claims 2 to 5, wherein
a predetermined crystal plane of each of the particles in the positive electrode active material (12) is oriented in a direction from the positive electrode layer (14) toward the negative electrode layer (20).

7. The all-solid-state cell according to claim 6, wherein
the particles in the positive electrode active material (12) have a layered rock salt structure or a spinel structure.

8. The all-solid-state cell according to claim 7, wherein
the particles in the positive electrode active material (12) have a layered rock salt structure represented by a general formula of $Li_p(Ni_x,Co_y,Al_z)O_2$ ($0.9 \leq p \leq 1.3$, $0.6 < x < 0.9$, $0.1 < y \leq 0.3$, $0 \leq z \leq 0.2$, $x + y + z = 1$), and
the predetermined crystal plane is a (003) plane.

9. The all-solid-state cell according to any one of claims 1 to 8, wherein
the lithium ion conducting material in the solid electrolyte layer (16) contains a garnet-, nitride-, perovskite-, phosphate-, sulfide-, or macromolecule-based material.

10. The all-solid-state cell according to any one of claims 1 to 9, wherein
the positive electrode layer (14) contains the positive electrode active material (12) and a positive electrode collector (22), the solid electrolyte layer (16) is located on one side of the positive electrode active material (12), and the positive electrode collector (22) is located on another side of the positive electrode active material (12), and
the negative electrode layer (20) contains the negative electrode active material (18) and a negative electrode collector (24), the solid electrolyte layer (16) is located on one side of the negative electrode active material (18), and the negative electrode collector (24) is located on another side of the negative electrode active material (18).

## FIG. 1A

## FIG. 1B

# FIG. 2A

# FIG. 2B

# FIG. 2C

EP 2 706 598 A1

# FIG. 3A

# FIG. 3B

# FIG. 4A

# FIG. 4B

**FIG. 5A**

**FIG. 5B**

**FIG. 5C**

FIG. 6

FIG. 7A

EXAMPLE 1

22 (Al)  12 (NCA)

14

16 (LLZ)

20

24 (Cu)  18 (CNTA)

FIG. 7B

EXAMPLE 2

22 (Al)  12 (NCA+LLZ+AB)

14

16 (LLZ)

20

24 (Cu)  18 (CNTA)

24

# FIG. 8A

REFERENCE EXAMPLE 1

22 (Al)    12 (NCA)

14

16 (LLZ)

20

24 (Cu)    18 (Graphite+LLZ)

# FIG. 8B

COMPARATIVE EXAMPLE 1

22 (Al)    12 (NCA+LLZ+AB)

14

16 (LLZ)

20

24 (Cu)    18 (Graphite+LLZ)

FIG. 9

THICKNESS OF POSITIVE ELECTRODE
ACTIVE MATERIAL(50 μm)

VOLUMETRIC
ENERGY DENSITY
(Wh/L)

THICKNESS OF SOLID
ELECTROLYTE LAYER(μm)

EP 2 706 598 A1

FIG. 10

THICKNESS OF POSITIVE ELECTRODE
ACTIVE MATERIAL (100 μm)

FIG. 11

THICKNESS OF POSITIVE ELECTRODE
ACTIVE MATERIAL (200 μm)

VOLUMETRIC
ENERGY DENSITY
(Wh/L)

THICKNESS OF SOLID
ELECTROLYTE LAYER (μm)

EP 2 706 598 A1

Europäisches
Patentamt

European
Patent Office

Office européen
des brevets

# EUROPEAN SEARCH REPORT

Application Number

EP 13 18 2972

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | JP 2008 181751 A (JAPAN FINE CERAMICS CT) 7 August 2008 (2008-08-07) | 1,3-5,9, 10 | INV. H01M4/485 |
| Y | * figures 3, 7 * <br> * paragraphs [0046], [0056], [0057] * | 2,6-8 | H01M4/525 H01M4/587 H01M10/0525 |
| X | US 2009/246625 A1 (LU WEN [US]) 1 October 2009 (2009-10-01) | 1,3-5,9, 10 | H01M10/0562 |
| Y | * figures 1, 15 * <br> * paragraph [0013] - paragraph [0017] * <br> * paragraphs [0033], [0123], [0243] * | 2,6-8 | ADD. H01M4/62 H01M4/02 |
| Y | EP 2 369 660 A1 (NGK INSULATORS LTD [JP]) 28 September 2011 (2011-09-28) <br> * paragraphs [0002], [0004], [0006], [0007], [0054], [0098] * <br> & JP 4 745463 B2 (NGK INSULATORS LTD [JP]) 10 August 2011 (2011-08-10) | 2,6-8 | |
| A | XIAN-MING LIU ET AL: "Carbon nanotube (CNT)-based composites as electrode material for rechargeable Li-ion batteries: A review", COMPOSITES SCIENCE AND TECHNOLOGY, ELSEVIER, UK, vol. 72, no. 2, 15 November 2011 (2011-11-15), pages 121-144, XP028439417, ISSN: 0266-3538, DOI: 10.1016/J.COMPSCITECH.2011.11.019 [retrieved on 2011-11-26] * sections 2, 4.1 and 4.4 * | 1,3-5 | |

TECHNICAL FIELDS SEARCHED (IPC)

H01M

The present search report has been drawn up for all claims

| Place of search | Date of completion of the search | Examiner |
|---|---|---|
| The Hague | 8 November 2013 | Järvi, Tommi |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 13 18 2972

This annex lists the patent family members relating to the patent documents cited in the above-mentioned European search report.
The members are as contained in the European Patent Office EDP file on
The European Patent Office is in no way liable for these particulars which are merely given for the purpose of information.

08-11-2013

| Patent document cited in search report | | Publication date | Patent family member(s) | | Publication date |
|---|---|---|---|---|---|
| JP 2008181751 | A | 07-08-2008 | JP | 5134254 B2 | 30-01-2013 |
| | | | JP | 2008181751 A | 07-08-2008 |
| US 2009246625 | A1 | 01-10-2009 | US | 2009246625 A1 | 01-10-2009 |
| | | | WO | 2009120872 A2 | 01-10-2009 |
| EP 2369660 | A1 | 28-09-2011 | CN | 102171867 A | 31-08-2011 |
| | | | EP | 2369660 A1 | 28-09-2011 |
| | | | JP | 4745463 B2 | 10-08-2011 |
| | | | US | 2010159326 A1 | 24-06-2010 |
| | | | WO | 2010074298 A1 | 01-07-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012197146 A
- WO 2011105021 A
- JP 2008181751 A
- JP 2007141520 A
- JP 4745463 B